# EUROPEAN PATENT APPLICATION

(11) **EP 2 472 523 A2**
(43) Date of publication of application: **04.07.2012**
(21) Application number: 11193137.4
(22) Date of filing: 13.12.2011
(51) Int. Cl.: G21C 5/06, G21C 5/16, G21C 15/06, G21C 17/00

(54) **Optimized nuclear fuel bundle supports and methods of creating reactor cores with the same**

(30) Priority: 28.12.2010 US 979970
(71) Applicant: Global Nuclear Fuel-Americas, LLC, Wilmington, North Carolina 28401 (US)
(72) Inventor: Pearson, Gregory Joseph, Wilmington, NC North Carolina 28401 (US); Karve, Atul A., Wilmington, NC North Carolina 28401 (US)
(74) Representative: Cleary, Fidelma

(57) **Abstract**

Fuel supports (148) have specially configured flow paths useable in reactor cores (36) to achieve desired levels of flow at given positions. Any number of differently-configured inlet orifices (195), from three to hundreds, are useable in a given core (36). Inlet orifice (195) configuration may include diameter sizing or presence of flow blockages such as filters, venturis, choke plates, and/or obstructions. Fuel supports (148) may be positioned within a core plate (49) in the nuclear reactor, with openings for a control blade (20) and instrumentation tubes (50) to pass through or between the fuel supports (148). Different fuel support (148) configurations may be used at outer core periphery, inner core periphery, and central core portions. Example methods configure fuel support (148) characteristics by examining the effect of modifying flow loss coefficients at particular bundle locations and configuring associated inlet orifices (195) to achieve the modified flow loss coefficients, if the effect is a positive one.

## Description

### BACKGROUND

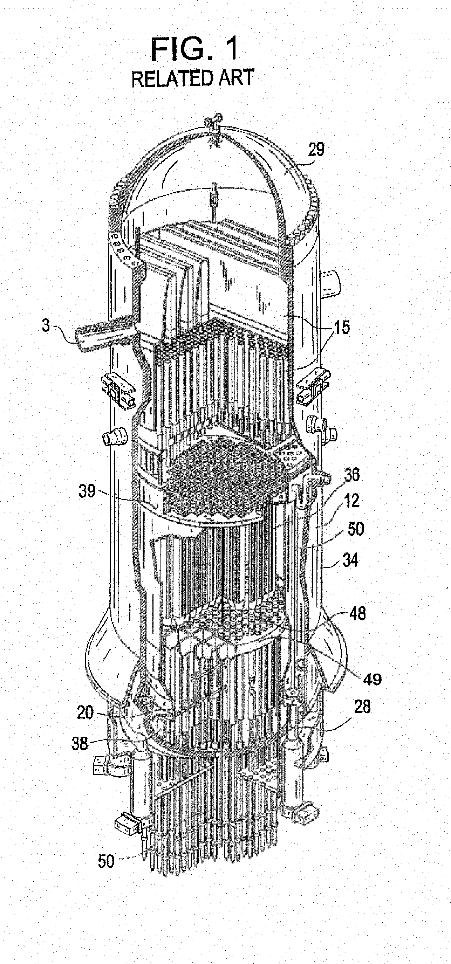

As shown in FIG. 1, a conventional nuclear reactor, such as a Boiling Water Reactor (BWR), may include a reactor pressure vessel (RPV) 12 with a generally cylindrical shape. RPV 12 may be closed at a lower end by a bottom head 28 and at a top end by a removable top head 29. A cylindrically-shaped core shroud 34 may surround reactor core 36, which includes several nuclear fuel elements or assemblies, called bundles herein, that generate power through fission. Shroud 34 may be supported at one end by a shroud support 38 and may include a removable shroud head 39 and separator tube assembly at the other end. One or more control blades 20 may extend upwards into core 36, so as to control the fission chain reaction within fuel elements of core 36. Additionally, one or more instrumentation tubes 50 may extend into reactor core 36 from outside RPV 12, such as through bottom head 28, permitting instrumentation, such as neutron monitors and thermocouples, to be inserted into and enclosed within the core 36 from an external position.

Fuel bundles may be aligned and supported by fuel supports 48 located on a core plate 49 at the base of core 36. Fuel supports 48 may receive individual fuel bundles or groups of bundles and permit coolant flow through the same. Fuel supports 48 may further permit instrumentation tubes 50, control blades 20, and/or other components to pass into core 36 through or between fuel supports 48. A fluid, such as light or heavy water, is circulated up through core 36 and core plate 48, and in a BWR, is at least partially converted to steam by the heat generated by fission in the fuel elements. The steam is separated and dried in separator tube assembly and steam dryer structures 15 and exits RPV 12 through a main steam nozzle 3 near a top of RPV 12. Other fluid coolant/moderators may be used in other reactor designs, with or without phase change.

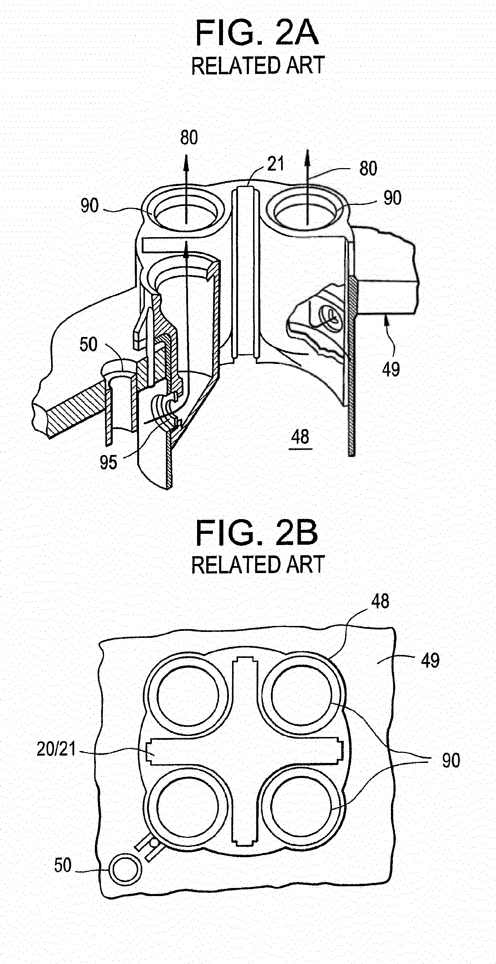

FIGS. 2A and 2B are detailed views of a related art fuel support 48 useable in the nuclear plant of FIG. 1, for example, that can receive and support up to four individual fuel bundles. As shown in FIGS. 2A and 2B, fuel support 48 includes openings 90 shaped to receive a lower end of a fuel bundle so as to support and align fuel bundles seated in fuel support 48. Openings 90 are open and permit coolant flow 80 through fuel support 48 into fuel bundles supported thereon. Openings 90 receive fluid flow through fuel support 48 from inlet or lower orifices 95, permitting fluid coolant/moderator to flow through fuel support 48. A cruciform or other opening 21 may permit a control blade 20 to pass between bundles supported by fuel support 48. It is understood however, that control blades 20 may not be present in every possible core location, such that opening 21 may be unfilled or nonexistent.

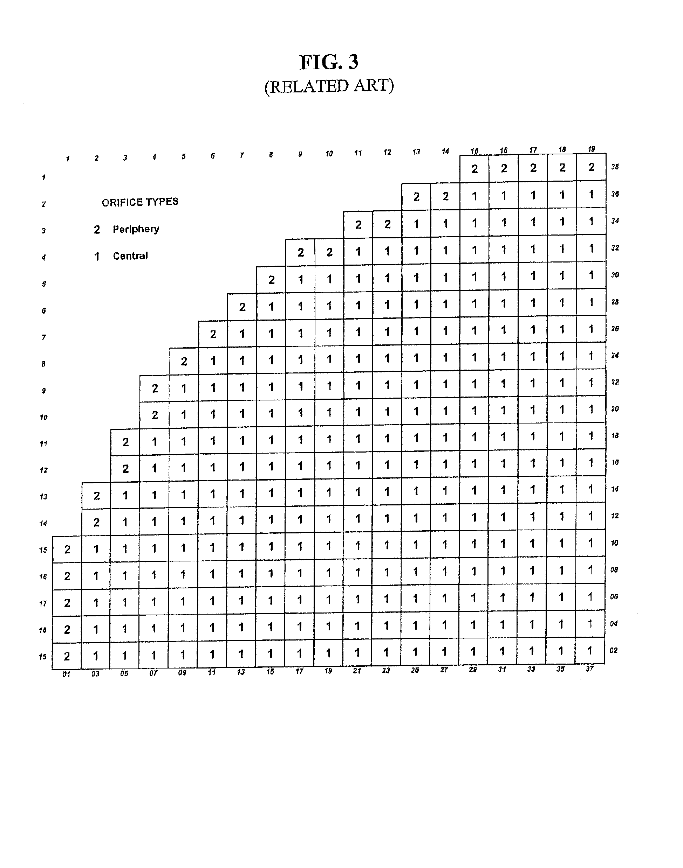

FIG. 3 is an illustration of a conventional core map, showing a quadrant of a conventional reactor core 36. Each grid location in FIG. 3 represents a fuel bundle location in the core 36, with each fuel bundle seating into an associated opening in a fuel support. Each grid location in FIG. 3 is identified with a number showing fuel support inlet orifice configuration in a conventional reactor core 36. That is, orifices 95 (FIG. 2A & 2B) conventionally have two different sizes, or diameters, to achieve two different flow rates through the core. Grid locations marked with a "1" in core 36 of FIG. 3 correspond to locations with orifices sized for central fuel bundles. Orifices for central fuel bundles at "1" locations are larger, permitting increased coolant and moderator flow through fuel supports and fuel bundles at the associated location. Orifices for peripheral fuel bundles at "2" locations are smaller, permitting less coolant and moderator flow into bundles at the periphery. In this way, as shown in FIG. 3, conventional cores 36 may have standard, larger fluid flow through central fuel bundles with a lower level of fluid flow occurring in the outermost ring or periphery of fuel bundles in the core.

### SUMMARY

The present invention resides in fuel supports and in a reactor core including the same. The fuel supports include an inlet orifice that permits a coolant/moderator to flow through the support into an associated fuel bundle seated into the support, and the inlet orifice is specially designed to achieve a desired fluid flow characteristic, such as coolant/moderator flow rate through the associated fuel bundle. The desired fluid flow characteristic may be determined based on a position of a bundle associated with the inlet orifice within a core of the nuclear reactor. Any number of differently-configured inlet orifices, having different associated fluid flow characteristics, may be used throughout the core and in individual supports. Fuel support configurations may include different inlet orifice diameters or use of flow blockages such as filters, venturis, choke plates, etc., to achieve a desired flow loss coefficient or flow rate under known conditions, for example. The fuel support may be positioned within a core plate in the nuclear reactor, permitting coolant/moderator flow and potentially a control blade and instrumentation tubes to pass through or between the fuel supports. Several fuel supports may be placed at the base of the reactor core, each support having physical configuration to achieve a desired flow characteristic at the associated fuel bundle position. For example, three different configurations may be used at outer core periphery, inner core periphery, and central portions of the core. The configuration at the outer periphery - those positions at the edge of the core and not surrounded by fuel bundles on each side - may have a highest flow loss coefficient so as to limit coolant/moderator flow to periphery bundles requiring less moderation and heat transfer. The configuration at an inner periphery, defined herein as the two or three bundle positions immediately inside the outer periphery, may have intermediate flow loss coefficients, and the configuration in the central portion may have the lowest flow loss coefficients, providing the highest levels of coolant/moderator flow to central bundles at higher power levels.

The invention also resides in a method of configuring flow path characteristics of fuel supports in a nuclear core. The method may include modifying flow loss coefficients at particular bundle locations, simulating core performance with the modified flow loss coefficients, analyzing the simulated core performance, and/or configuring at least one fuel support to achieve the modified flow loss coefficients. Analyzing may be performed by comparing simulated core performance against desired performance characteristics or comparing simulated core performance against a previously simulated core performance with different flow loss coefficients, in an iterative manner.

### BRIEF DESCRIPTION OF DRAWINGS

Embodiments of the invention will now be described, by way of example only, with reference to the accompanying drawings in which:
FIG. 1 is an illustration of a conventional nuclear fuel reactor.
FIGS. 2A and 2B are two different views of a conventional fuel support.
FIG. 3 is an illustration of a core map of a conventional reactor core.
FIG. 4 is an illustration of an example embodiment fuel support.
FIG. 5 is an illustration of a core map of an example embodiment reactor core.
FIG. 6 is a graph of experimental results using example embodiment versus conventional fuel supports.
FIG. 7 is a flow chart illustrating example methods.

### DETAILED DESCRIPTION

Hereinafter, example embodiments will be described in detail with reference to the attached drawings. However, specific structural and functional details disclosed herein are merely representative for purposes of describing example embodiments. For example, although example embodiments and methods are described in connection with a Boiling Water Reactor (BWR), it is understood that example embodiments and methods are useable with several other reactor types, including PWRs, ESBWRs, heavy-water reactors, breeder reactors, etc. all using a fluid coolant and/or moderator. The example embodiments may be embodied in many alternate forms and should not be construed as limited to only example embodiments set forth herein.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of example embodiments. As used herein, the term "and/or" includes any and all combinations of one or more of the associated listed items.

It will be understood that when an element is referred to as being "connected," "coupled," "mated," "attached," or "fixed" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between", "adjacent" versus "directly adjacent", etc.).

As used herein, the singular forms "a," "an," and "the" are intended to include the plural forms as well, unless the language explicitly indicates otherwise. It will be further understood that the terms "comprises", "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

It should also be noted that in some alternative implementations, the functions/acts noted may occur out of the order noted in the figures or described in the specification. For example, two figures or steps shown in succession may in fact be executed in parallel and concurrently or may sometimes be executed in the reverse order or repetitively, depending upon the functionality/acts involved.

### Example Embodiments

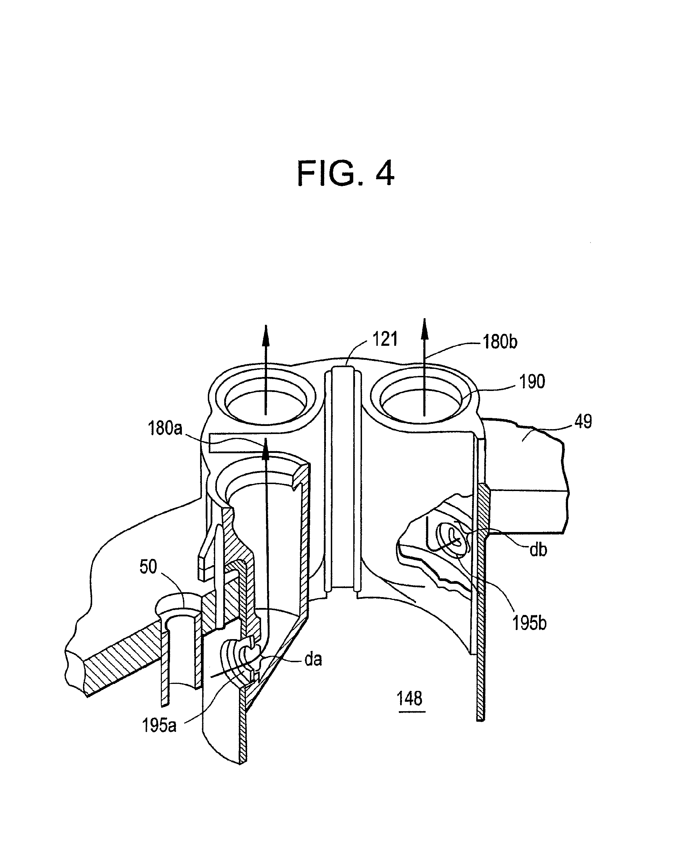

FIG. 4 is an illustration of example embodiment fuel support 148 that includes inlet orifices 195 with optimized fluid flow properties. Example embodiment fuel supports are shown as similar to, and may be used in place of, conventional fuel supports 48 shown in FIG. 2A and 2B to provide alignment, support, and coolant/moderator flow to fuel bundles seated in the supports; for example, an optional control blade opening 121 and/or four fuel bundle openings 190 may be present in example embodiment fuel support 148 to match conventional fuel support characteristics. It is understood, however, that example embodiment fuel supports may have several different features and configurations, including physical shape, opening number, control blade accommodation, etc., from conventional fuel supports 48 (FIGS. 2A & 2B) and example embodiment fuel support 148 shown in FIG. 4. Example embodiment fuel supports 148 include one or more inlet orifices 195 that are specially sized or configured to optimize fluid flow rates through associated fuel bundles, based on position within a nuclear core. Individual inlet orifices 195ₐ, _{b} may each be uniquely configured and differ from each other, or may be substantially the same. Inlet orifices 195 of different example embodiment fuel supports 148 within a core may be configured the same as some other inlet orifices in other fuel supports or be entirely unique, all based on the desired flow characteristics at the position of the inlet orifices 195. That is, although example embodiment fuel support 148 is shown with two inlet orifices 195ₐ and 195_{b} having different respective diameters *d*ₐ and *d*_{b}*,* it is understood that all inlet orifices 195 in example embodiment fuel support 148 could have a same diameter and other aspects, while differing from other inlet orifices in other example embodiment fuel supports positioned elsewhere in a core and not shown in FIG. 4. Example methods for determining orifice configuration of example embodiment fuel supports and associated fluid flow characteristics are discussed following example embodiments below.

Inlet orifices 195 of example embodiment fuel supports 148 are physically configured to provide a desired flow level of fluid coolant/moderator through an associated bundle during plant operation. The configuration may be achieved in several ways. For example, diameter *d*ₐ of inlet orifice 195ₐ may be set during fabrication of fuel support 148 to permit a desired level of coolant flow 180ₐ therethrough. Similarly, diameter dₐ may be achieved or adjusted following fabrication through machining or remolding, for example. Or, for example, diameter *d*_{b} of inlet orifice 195_{b} may be achieved or adjusted through addition of an insert, such as an annular choke plate, that reduces diameter *d*_{b} and achieves a desired lower flow rate 180_{b} therethrough. Additionally, inserts, baffles, filters and/or any other structure may be used in example embodiment fuel support 148, on either side of inlet orifices 195, to affect fluid flow loss coefficients of, and a resulting amount of fluid flow through, a given inlet orifice 195 to a desired level during plant operation. For example, a flow restrictor or blockage may be placed in a flow path prior to or in opening 190 to adjust an amount of coolant / moderator flowing into an associated inlet orifice 195 and ultimately through the fuel bundle seated into the associated opening 190.

The levels of fluid coolant/moderator flow permitted by various diameters and/or other configurations of inlet orifices 195 in example embodiment fuel supports 148 may be set at any desired level. Local flow loss coefficients caused by these configurations on a given fluid may provide a universal metric to compare individual inlet orifice 195 functionality in an operating nuclear plant. For a universal inlet pressure and fluid, a higher loss coefficient correlates with less fluid moderator/coolant flow through an orifice and associated fuel bundle, resulting in less moderation and fuel usage while directing more flow to other bundles. Higher loss coefficients may be achieved in example embodiment fuel supports 148 by decreasing inlet orifice 195 diameter and/or providing other flow-interrupting structures within inlet orifice 195 or fuel support 148, as discussed above. Under the same universal inlet pressure and coolant/moderator fluid, a lower loss coefficient correlates with increased fluid moderator/coolant flow through an orifice and associated fuel bundle, resulting in greater moderation and fission energy generation while decreasing flow available to other bundles. Lower loss coefficients may be achieved in example embodiment fuel supports 148 by increasing inlet orifice 195 diameter and/or removing flow-interrupting structures in example embodiment fuel supports 148. Several different types of orifice configurations may be used together on a same fuel support 148 or even on a same inlet orifice 195, based on the flow characteristics desired of that orifice.

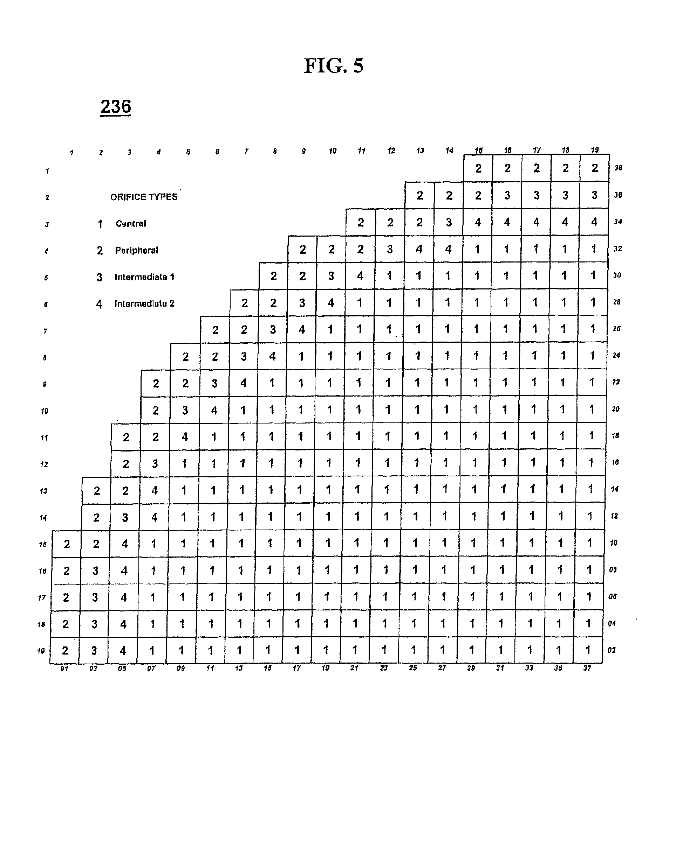

FIG. 5 is an illustration of a core map showing how a quadrant of an example embodiment core 236 may be populated with example embodiment fuel supports 148 (FIG. 4). Each grid position in FIG. 5 corresponds to a fuel bundle location and associated fuel support inlet orifice 195 (FIG. 4) providing a coolant/moderator flow 180 into the bundle. As such, it is understood that example embodiment fuel supports 148 (FIG. 4) may span one or more grid positions of FIG. 5, depending on the number of orifices and shape of example embodiment fuel supports. Although example embodiment core 236 is shown with 19 x 19 radial fuel bundles in a quadrant, it is understood that other numbers of fuel bundles and core shapes are useable with example embodiments and methods, including BWR, ESBWR, ABWR, PWR, non-LWR designs, and/or any other type of reactor design where fuel supports with orifices are useable.

As shown in FIG. 5, each grid location is associated with a unique orifice configuration denoted by a numeral "1," "2," "3," or "4" in the grid location. As shown in the legend of FIG. 5, inlet orifices at "1" locations have a central configuration, with the lowest loss coefficients, achieved with largest orifice diameters and/or fewest flow obstructions, for example. Inlet orifices at "2" locations have an outer peripheral configuration, with the highest loss coefficients and smallest orifice diameters/most flow obstructions. As a specific example, the loss coefficient for orifices in example embodiment fuel supports at "1" central locations may be approximately 20-25%, such as 21%, of the loss coefficient for orifices at "2" peripheral locations; i.e., greater flow losses and less flow occur at "2" positions. Orifices at "3" and "4" inner periphery positions, defmed herein as the two or three bundle positions immediately inside the outer periphery, have intermediate loss coefficients, between those of orifices at "1" and "2" central and peripheral positions. For example, orifices at "3" positions may have approximately 77-83%, such as 80%, the loss coefficient of orifices at "2" peripheral positions, and orifices at "4" positions may have approximately 37-43%, such as 40%, the loss coefficient of orifices at "2" peripheral positions. These unique loss coefficients of different orifices in fuel supports may be achieved through the different configuring techniques discussed above for changing the flow parameters discussed above, including varying orifice diameter, adding/removing flow obstructions, etc.

In this way, example embodiment core 236 includes example embodiment fuel supports having several types of orifices with intermediate variations of loss coefficients, from outer periphery orifices with the highest loss coefficients to inner central orifices with the lowest loss coefficients. The quadrant shown in FIG. 5 may be mirrored about three axes to produce a full example embodiment core 236 that is symmetrical in orifice layout about these axes.

Bundles at peripheral and intermediate positions "2," "3," and "4" in example embodiment core 236 may possess lower fuel enrichment (through age or initial enrichment) and suffer from increased neutron loss at core boundaries, resulting in lower fission energy production. Due to the lower power levels at peripheral and inner peripheral positions, less moderator/coolant flow may be required to maintain bundles at these positions at operating temperature and maximum power production. Example embodiment core 236 provides higher loss coefficients, and thus less flow, for fluid moderator/coolant through intermediate bundles with orifices at "3" and "4" locations, compared to conventional cores, such as the core shown in FIG. 3, which provide full, central orifices for the same bundles at intermediate, inner periphery locations. In this way, example embodiment core 236 may direct more moderator/coolant to bundles at central locations "1," while directing less moderator/coolant to bundles at intermediate peripheral locations "3" or "4," with the same whole-core flow rates, compared to conventional cores such as those shown in FIG. 3. Bundles at central "1" locations may have higher enrichment and power rates compared to intermediate or peripheral locations "2," "3," or "4". Bundles at central "1" locations may thus benefit from the increased neutron moderation and fluid energy transfer from the fluid coolant/moderator in example embodiment core 236.

Further, near end of operating cycles, bundles in a given core are more depleted in fissionable material, and bundles at peripheral and intermediate positions "2," "3," and "4" in example embodiment core 236 may possess especially low fuel enrichment due to age and lower initial enrichment. Operators in end of cycle conditions may increase total core flow so as to provide additional moderator to the depleted bundles, sustaining a fission chain reaction for several more days beyond what typical or rated core flow would be able to sustain. However, due to the lower power levels from low enrichment and neutron loss at peripheral and inner peripheral positions, the increased moderator/coolant flow in end of cycle conditions may be wasted on peripheral and inner peripheral positions and result in wet moderator with high moisture carryover to pass through the core through these positions. Example embodiment core 236 provides higher loss coefficients for increased core flow, and thus even less flow at end of cycle conditions using increased core flow, for fluid moderator/coolant through intermediate bundles with orifices at "3" and "4" locations, compared to conventional cores. In this way, example embodiment core 236 may further decrease moisture carry-over and increase steam quality and plant efficiency for plants operating with increased core flow to extend cycle life.

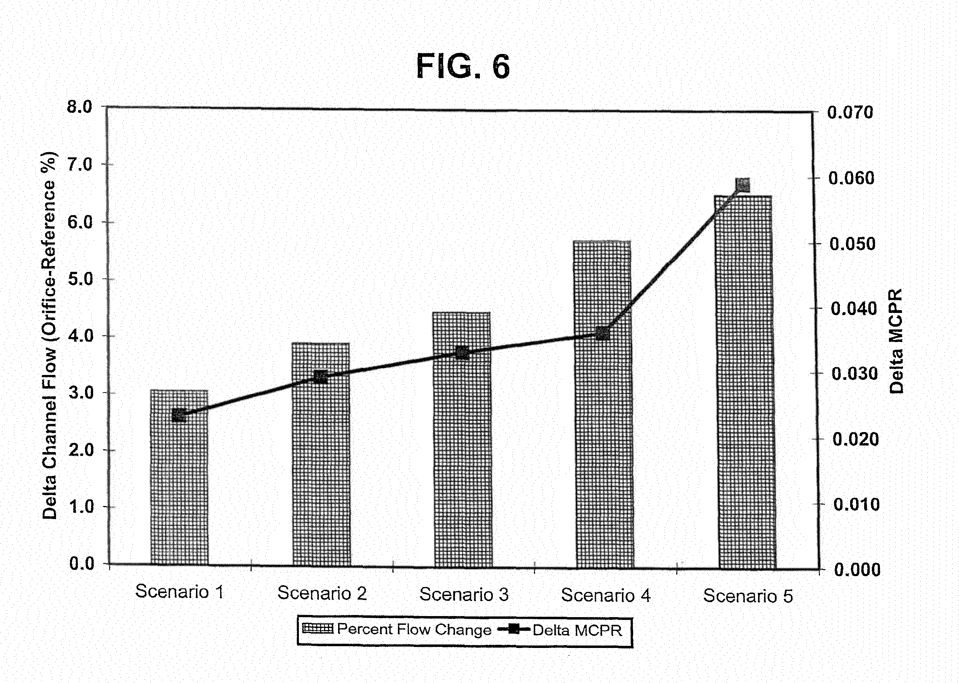

Other example embodiment core configurations are achievable with example embodiment fuel supports and individualized orifices therein. For example, as shown in scenarios 1-3 below in FIG. 6, only a single type of intermediate orifice may be used at both "3" and "4" inner periphery positions of example embodiment core 236 in order to increase fuel support standardization or achieve other core flow characteristics. Or, for example, inlet orifices with higher loss coefficients may be used at controlled locations, which are bundle positions directly adjacent to a control blade that typically require less moderation and coolant. Using example embodiment fuel supports to restrict coolant / moderator flow at controlled positions may further decrease moisture carryover and/or provide additional flow to higher-energy fuel bundles to increase plant efficiency. Because of the flexibility offered by example embodiment fuel supports, almost any desired flow characteristics can be achieved with proper fuel bundle configuration, resulting in an example embodiment core configuration having desired coolant flow, and thus energy generating or safety-margin complying, properties.

The inventors compared example embodiment fuel supports and cores, with more than two different inlet orifice and thus bundle flow characteristics, with conventional cores having only two, central and peripheral, inlet orifice flow characteristics. FIG. 6 is a graph of the results showing the percent difference of fluid coolant/moderator flow through example embodiment fuel supports in central locations of example embodiment cores versus conventional fuel support orifices in central locations of conventional cores (bars). FIG. 6 further shows the change in Minimum Critical Power Ratio (MCPR, a ratio between power levels producing critical boiling transition in a single fuel bundle versus operating power levels) value between the same scenarios (line and points).

To generate the results of FIG. 6, five ESBWR cores having a same whole-core flow rate of 77 Mlb/hr and energy density of 54 kw/l for 100% rated power were simulated using a known PANACEA (TRACG04/PANAC11) core thermodynamic code. Each core contained 1132 bundles at associated positions, such as the layout of example embodiment core 236 shown in FIG. 5. The only parameter varied in the simulations was the fuel support configuration at specific locations to achieve different loss coefficients and flow rates at different core locations, as done with example embodiment cores. The exception is scenario 5, which used the same parameters of scenario 4, but with different operation cycle length and reduced reload fuel requirements in combination with an optimized fuel design. Table 1 summarizes the varied parameters of scenarios 1-5, shown in FIG. 6:

| Scenario | Intermediate (3, 4)-to-Peripheral (2) Loss Coefficient Ratio | Central (1)-to-Peripheral (2) Loss Coefficient Ratio |
|---|---|---|
| Reference | 0.23 | 0.23 |
| 1 | 0.40 | 0.20 |
| 2 | 0.60 | 0.19 |
| 3 | 0.80 | 0.19 |
| 4 | 0.40 (4), 0.80 (3) | 0.19 |
| 5* | 0.40 (4), 0.80 (3) | 0.19 |

The simulated channel flow and MCPR values for scenarios 1-5 were compared against the results of the simulated channel flow and MCPR values for the Reference Scenario, and the percentage change or value difference was graphed in FIG. 6. As shown in FIG. 6, each example embodiment core using more than two different types of orifices showed significant improvement in channel flow (at least 3% increase) and MCPR (at least 0.02 improvement). At current uranium costs, every 0.01 MCPR improvement in an operating commercial light water reactor translates to approximately $400,000.00 in reduced fuel costs. As such, example embodiment fuel supports with variable orifice characteristics and flow rates based on core position of the orifice and associated bundle may be used in example embodiment reactor cores to increase reactor efficiency.

### Example Methods

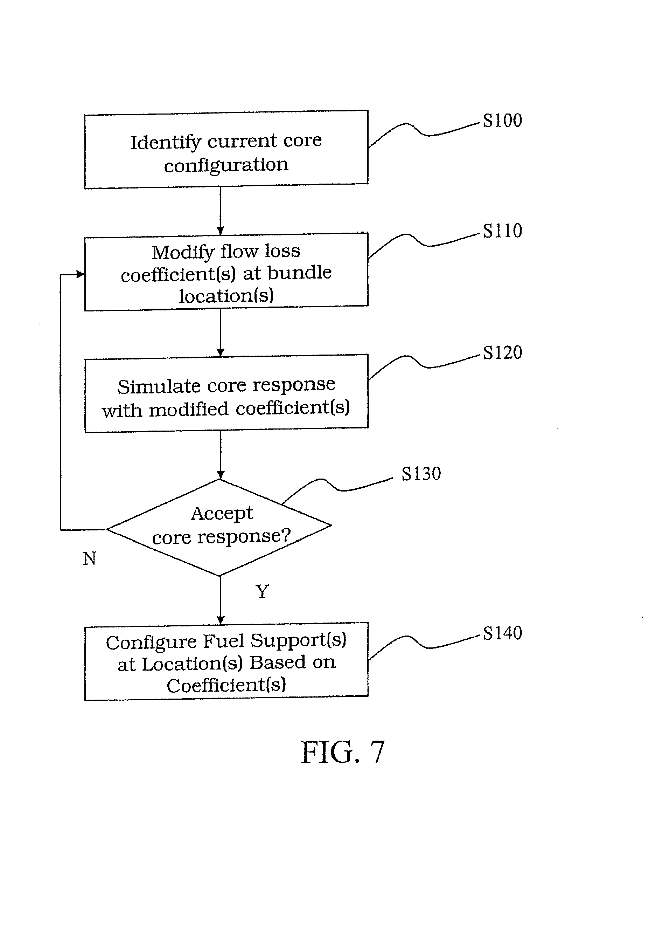

Example methods generate nuclear core configurations having customized fuel supports to achieve several different desired levels of coolant/moderator flow within the core. As shown in FIG. 7, in S100 a known core configuration, including fuel characteristics, bundle location, core operating parameters, etc. is identified for optimization. For example, a program may receive input of several reactor core operational characteristics in S100. In S110, one or more loss coefficients are proposed or modified for one or more associated bundle positions in the known core configuration. For example, a user may input or alter bundle location flow loss coefficients, or a computer processor may iteratively cycle through all potential flow loss coefficients within an acceptable range, in S110. The resulting core with modified core flow coefficients for each bundle position is then simulated with a thermodynamic reactor modeling code in S120. The results, including variables such as central bundle flow rate and MCPR, are determined by the simulator and output for analysis or comparison in S130. For example, a user or computer program may determine if the resulting core operational parameters exceed a minimum performance threshold or compare the operational results against previous results from previous iterations with different flow loss coefficients in S130. Actions S100, S110, S120, and/or S 130 may then optionally be repeated for any number of iterations until an acceptable or best flow loss coefficient map is determined for a particular core. In S 140, the accepted core flow loss coefficient map is achieved by identifying fuel support configurations that possess the accepted flow loss coefficients for each core position. Example embodiment fuel supports may then be fabricated or otherwise configured to achieve the identified flow loss coefficients for each core location in S140.

Example methods including S100-S140 may be executed for each bundle location within a core or only a subset of bundle locations of interest. Alternatively, example methods may be executed only with respect to a particular bundle in order to, for example, optimize core operating characteristics or fix a limiting problem with respect to the particular bundle location. Similarly, example methods may be used as an integral part of core design or as a separate step performed alternatively and/or iteratively with other known methods of core design. For example, a known core design program may output a core map using fuel bundle characteristics and core parameters using uniform orifice configuration and associated flow loss coefficients. Example methods including S100-S140 may then be performed on some or all fuel bundle locations involved in the map, changing their operational characteristics including flow loss coefficient. The core design program may then be re-executed with the modified characteristics, and this core configuring involving example and other core optimization methods may continue until no further optimization is possible or desired. Or, example methods may be used as an integral part of otherwise known core design methods, treating flow loss coefficient parameters affected by orifice configuration as additional variables in the core design process. It is also recognized that one or more actions S100-S140 may be executed by different programs or parties in the fuel services and licensee context.

Example embodiments and methods thus being described, it will be appreciated by one skilled in the art that example embodiments may be varied through routine experimentation and without further inventive activity. For example, it is readily appreciated upon reading the above disclosure that other core configurations and fuel support shapes and capacities from the specific example embodiments described may be achieved. Variations are not to be regarded as departure from the spirit and scope of the example embodiments, and all such modifications as would be obvious to one skilled in the art are intended to be included within the scope of the following claims.

## Claims

1. A fuel support (148) for use in a nuclear reactor, the fuel support (148) defining a fluid flow path through the support (148) by,
an opening (21) shaped to receive a nuclear fuel bundle, and
an inlet orifice (195), the flow path configured for a fluid flow characteristic at an inner periphery bundle position within a core of the nuclear reactor.

2. The fuel support (148) of claim 1, wherein the fuel support (148) defines two inlet orifices (195), and wherein each of the two inlet orifices (195) has a different configuration and associated fluid flow characteristic from each other of the two inlet orifices (195) of the fuel support (148).

3. The fuel support (148) of claim 2, wherein the two orifices (195) each have a different diameter from each other of the two orifices (195).

4. The fuel support (148) of any of claims 1 to 3, wherein the fuel support (148) is connected to a core plate (49) in the nuclear reactor, the fuel support (148) further defining an opening for a control blade.

5. The fuel support (148) of any of claims 1 to 4, wherein the flow path is configured for the fluid flow characteristic by at least one of inlet orifice (195) diameter and blockage in the flow path.

6. A reactor core (236) for a nuclear reactor, the core (236) comprising:
a plurality of fuel supports (148) as recited in any of claims 1 to 5, arranged at a base of the core (236), each of the fuel supports (148) defining a fluid flow path (80) through the support and configured to receive a fuel bundle, at least three of the defmed flow paths (80) having different flow loss coefficients from each other; and
a plurality of fuel bundles each seated into a corresponding one of the fuel supports (148).

7. The reactor core (236) of claim 6, wherein a first of the three flow paths (80) is located at an outer periphery of the core (236), wherein a second of the three flow paths (80) is located at an inner periphery of the core (236), and wherein a third of the three flow paths (80) is located in a central portion of the core (236).

8. The reactor core (236) of claim 7, wherein the first flow path (80) begins at a first inlet orifice (195) of a fuel support (148), wherein the second flow path (80) begins at a second inlet orifice (195) of a fuel support (148), and wherein the third flow path (80) begins at a third inlet orifice (195) of 1 fuel support (148).

9. The reactor core of claim 8, wherein the first orifice has a highest flow loss coefficient of the three orifices, and wherein the third orifice has a lowest flow loss coefficient of the three orifices.

10. The reactor core of any of claims 6 to 9, further comprising:
a core plate (49), each of the fuel supports (148) being connected to and supported by the core plate (49).

11. The reactor core of claim 10, further comprising:
at least one control blade (20) passing through the core plate (49) and one of the fuel supports (148).

12. The reactor core of any of claims 6 to 11, wherein the three flow paths (80) include different blockages from each other.

13. The reactor core (236) of any of claims 6 to 8, wherein,
a first subset of the fuel supports (148) extends around an outer periphery of the core (236),
a second subset of the fuel supports (148) extends around an inner periphery of the core (236) adjacent to the first subset of the fuel supports (148), and
a third subset of the fuel supports (148) extends throughout a central portion of the core (236) within the second subset of fuel supports (148), and wherein,
the first subset of fuel supports (148) define a first flow path (80) of the three flow paths (80) having a first flow loss coefficient,
the second subset of fuel supports (148) defme a second flow path (80) of the three flow paths (80) having a second flow loss coefficient, and
the third subset of fuel supports (148) define a third flow path (80) of the three flow paths (80) having a third flow loss coefficient, and wherein the first, second, and third flow loss coefficients are each different from each other, and wherein the third flow loss coefficient is approximately 20-25% of the first flow loss coefficient, and wherein the second flow loss coefficient is approximately 40-80% of the first flow loss coefficient.

14. A method of configuring fuel supports (148) in a nuclear core (236), the method comprising:
modifying (S110) a flow loss coefficient for at least one bundle location in a configuration of the nuclear core (236);
simulating (S120) core performance with the modified flow loss coefficient;
analyzing (S130) the simulated core performance; and
configuring (S 140) at least one fuel support (148) to achieve the modified flow loss coefficient at the at least one bundle position, if the analyzing indicates the simulated core performance is favorable.

15. The method of claim 14, wherein the analyzing (S 130) includes at least one of comparing the simulated core performance against a performance threshold and comparing the simulated core performance against a previously simulated core performance with different flow loss coefficients.
